# EUROPÄISCHE PATENTSCHRIFT

(11) **EP 1 860 001 B1**
(45) Veröffentlichungstag und Bekanntmachung des Hinweises auf die Patenterteilung: **21.07.2010**
(21) Anmeldenummer: 07009790.2
(22) Anmeldetag: 16.05.2007
(51) Int. Cl.: B60R 21/217

(54) **Airbag mit einem genähten oder gefalteten Abschluss einer Umfangsnaht**
Air bag with a sewed or folded surrounding stitched end of seam
Sac gonflable avec extrémité du fil cousu

(30) Priorität: 26.05.2006 DE 102006025017
(43) Veröffentlichungstag der Anmeldung: 28.11.2007
(73) Patentinhaber: Autoliv Development AB, 447 83 Vårgårda (SE)
(72) Erfinder: Wittmann, Ernst, 85241 Hebertshausen (DE); Lechner, Peter, 85250 Altomünster (DE)
(74) Vertreter: Stornebel, Kai

(56) Entgegenhaltungen:
- EP-A- 1 580 085
- DE-U1- 20 105 734
- DE-U1- 20 218 550
- FR-A- 2 724 626

## Beschreibung

Die Erfindung betrifft einen Airbag aus einem Airbaggewebe, insbesondere für einen Seitenairbag, das mit zumindest einer teilumfänglichen Umfangsnaht eine doppellagige Kammer ausbildet, in der eine Einführöffnung für einen Gasgenerator vorgesehen ist.

Die Erfindung ist insbesondere für einen Kopf-Thorax-Airbag vorgesehen, bei dem eine Einführöffnung des Gasgenerators in der Nähe eines verriegelten Nahtendes einer Umfangsnaht oder einer Saumnaht angeordnet ist.

Airbags sind in einem weiten Umfang in Kraftfahrzeugen vorgesehen, um bei einem Unfall oder bei einem bevorstehenden Unfall ein Polster durch einen aufgeblasenen Gassack zu bilden. Der Gassack besteht in der Regel aus einem Gewebe, das doppellagig ausgeführt ist und eine oder mehrere Kammern ausbildet. Neben einer einstückig gewobenen Ausbildung des Airbags kann dieser auch aus einem Airbaggewebezuschnitt genäht werden. Um zwei aufeinander gelegte Gewebeabschnitte miteinander zu verbinden, wird eine Umfangsnaht erzeugt, über die gegebenenfalls in Zusammenwirkung mit einer Falzkante eine im Wesentlichen geschlossene Kammer entsteht. Die Befüllung dieser Kammer erfolgt über einen Gasgenerator, der über eine elektrische Steckverbindung mit einer Steuereinheit verbunden ist. Wird ein Unfall oder ein bevorstehender Unfall detektiert, wird von der Steuereinheit ein entsprechendes Signal an den Gasgenerator übermittelt und dieser gezündet. Da ein Airbag nur im aufgeblasenen Zustand seine Wirksamkeit entfaltet, sind höchste Zuverlässigkeitsanforderungen an den Gasgenerator über die gesamte erwartete Lebensdauer des Kraftfahrzeuges zu stellen.

Der Einbau von Airbags und Gasgeneratoren in ein Kraftfahrzeug erfordert in einem großen Umfang Handarbeit, da diese Komponenten erst relativ spät zusammen mit der Innenausstattung montiert werden. Während der Gasgenerator und das Airbaggewebe bereits vormontiert werden können, kann eine elektrische Kontaktierung mit einem Stecker der Steuereinheit erst beim oder nach dem Einbau des Airbags in das Fahrzeug erfolgen.

Bei einer entsprechenden Nahtführung besteht das Problem, dass ein Restfadenüberstand der Umfangs- oder Saumnaht in dem Bereich der elektrischen Kontaktierung des Gasgenerators gelangen und beim Kontaktieren Probleme verursachen kann. Es kann der Fall auftreten, dass der Restfadenüberstand beim Kontaktieren des Gasgenerators zwischen einem Kabelstecker von der Steuereinheit und einem Gasgenerator-Interface gelangen und darin eingeklemmt werden kann. Dadurch wird eine so genannte Scheinverrastung hervorgerufen, bei der eine mechanisch feste, elektrisch jedoch nicht einwandfreie Anbringung des Steckers an dem Gasgenerator erfolgt. Ebenfalls ist es möglich, da gegebenenfalls vorgesehene, formschlüssige Verrastungselemente nicht richtig miteinander eingreifen, dass sich der Kabelstecker von dem Gasgenerator wieder lösen kann, was zu einer Aufhebung der elektrischen Kontaktierung oder zu einer Fehlermeldung in der Fahrzeugelektronik führt.

Die DE 202 18 550 U1 beschreibt einen Gassack für ein Fahrzeuginsassen- Rück-haltesystem mit einer Einblasöffnung zum Anschluss an ein Gasveileilungssystem. An der Einblasöffnung kann eine Verstärkungslage mit der Gassackwandung verbunden werden, die die Berandung der Einblasöffnung innenseitig zumindest teilweise abdeckt. Die Verstärkungslage kann im Bereich der Berandung aus der Einblasöffnung herausragen und wird um die Wandung umgeschlagen.

Die DE 201 05 734 U1 beschreibt ein Gassackmodul für ein Fahrzeuginsassen-Rückhaltesystem mit einem Gassack und einem lang gestreckten Gasgenerator, der in einen Abschnitt des Gassackes teilweise hineinragt. Der Gasgenerator ragt soweit in den Gassack hinein, dass sämtliche Ausströmöffnungen in dem Gassack befindlich sind. An dem Gasgenerator erstreckt sich entlang eines wesentlichen Teils der axialen Länge eine Halterung, die teilweise in den Gassack hineinragt und den Gasgenerator wenigstens abschnittsweise umgibt. Der außerhalb des Gasgenerators befindliche Teil der Halterung weist Befestigungselemente zur Befestigung an einem Fahrzeugteil auf.

Aufgabe der vorliegenden Erfindung ist es, einen Airbag bereitzustellen, mit dem Probleme bei der elektrischen Kontaktierung vermieden und eine sichere Verrastung sichergestellt werden kann.

Erfindungsgemäß wird diese Aufgabe durch einen Airbag mit den Merkmalen des Anspruchs 1 gelöst. Vorteilhafte Ausgestaltungen und Weiterbildungen der Erfindung sind in den Unteransprüchen aufgeführt.

Der erfindungsgemäße Airbag aus einem Airbaggewebe mit einer zumindest teilumfänglichen Umfangsnaht, die eine doppellagige Kammer ausbildet, in der eine Einführöffnung für einen Gasgenerator vorgesehen ist, sieht vor, dass ein Restfadenüberstand im Bereich der Einführöffnung fixiert oder mit dem Airbaggewebe bzw. einem Teil des Airbaggewebes umgeklappt und anschließend fixiert ist. Dadurch wird der Restfadenüberstand aus dem Bereich der Kontaktierung bzw. aus dem Einflussbereich des Gasgenerators verlegt, so dass eine Scheinverrastung wirksam ausgeschlossen werden kann.

Eine Weiterbildung sieht vor, dass der Restfadenüberstand vernäht, verklebt oder verschweißt und dadurch an dem Airbaggewebe wirksam und dauerhaft festgelegt ist. Die Festlegung muss jedoch nur bis zur Montage des Gasgenerators aufrechterhalten bleiben.

Ebenfalls ist es vorgesehen, dass das Airbaggewebe mit dem Restfadenüberstand von der Einführöffnung weggeklappt ist, um das Nahtende aus dem Bereich des Gasgenerators oder der Kontaktierung des Gasgenerators herauszubewegen. Dieses Wegklappen dichtet gleichzeitig die Einführöffnung gegen den Gasgenerator ab, so dass dies zu einer erhöhten Dichtigkeit des Airbags beiträgt.

Ebenfalls ist vorgesehen, dass das Airbaggewebe, das den Restfadenüberstand aufweist, nach innen in die Kammer eingeklappt ist, um den Restfadenüberstand nicht in den Bereich der elektrischen Kontaktierung des Gasgenerators gelangen zu lassen.

Bei einem weggeklappten Airbaggewebe ist es vorgesehen, dass dieser geklappte Gewebeteil festgenäht, verklebt oder verschweißt ist, wodurch eine Festlegung des weggeklappten Gewebeabschnittes an dem übrigen Airbaggewebe erfolgt.

Eine Variante der Erfindung sieht vor, dass die Einführöffnung im Bereich einer Falzkante des Airbaggewebes durch einen Schlitz ausgebildet wird, der durch beide Gewebelagen hindurchgeht. Dadurch entsteht ein Lappen unterhalb der Einführöffnung, in dem der Restfadenüberstand angeordnet ist. Dieser Lappen wird umgeklappt und fixiert, wodurch einerseits ein Abdichten der Einführöffnung gegenüber dem Gasgenerator erfolgt und andererseits der Restfadenüberstand mitsamt dem Lappen aus der Kontaktierungszone entfernt wird.

Nachfolgend werden Ausführungsbeispiele der Erfindung anhand der beigefügten Figuren näher erläutert. Gleiche Bezugszeichen in den Figuren bezeichnen gleiche Elemente.
- Figur 1 -: einen herkömmlichen Airbag in Draufsicht;
- Figur 2 -: eine Detaildarstellung einer erfindungsgemäßen Variante;
- Figur 3 -: eine Detailansicht mit einer fixierten Umfangsnaht;
- Figur 4 -: eine Detailansicht vor dem Einführen eines Gasgenerators;
- Figur 5 -: eine Ausgestaltung gemäß Figur 4 nach Einführen eines Gasgenerators und Umklappen eines Airbaggewebebereiches; sowie
- Figur 6 -: eine Variante des Airbags mit einem umgeklappten Lappen.

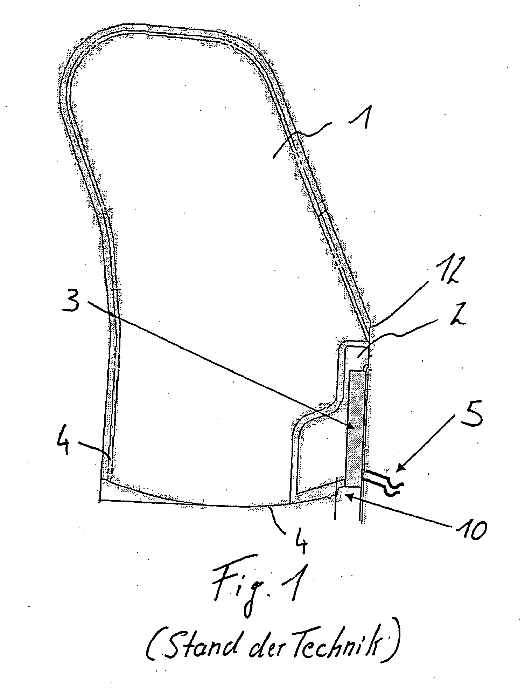

In der Figur 1 ist in Seitenansicht ein Airbag aus einem Airbaggewebe mit vorliegend einer Kammer gezeigt. Auch mehrkammerige Airbags können vorgesehen sein. Der Airbag 1 ist durch einen Airbaggewebezuschnitt gebildet, der entlang einer Falzkante 12 gefaltet und über eine Umfangsnaht 4 unter Ausbildung einer Kammer vernäht ist. In der Kammer ist ein Aufnahmebereich 2 für einen Gasgenerator 3 vorgesehen, der über eine Einführöffnung 10 in den Aufnahmebereich 2 eingeführt wird. Ein Restfadenüberstand 5 der Umfangsnaht 4 bzw. einer Saumnaht kann bei einer elektrischen Kontaktierung an dem aus der Einführöffnung 10 des Airbags 1 herausragenden Teil des Gasgenerators 3 anliegen und eine Scheinkontaktierung bzw. eine elektrische Unterbrechung bewirken.

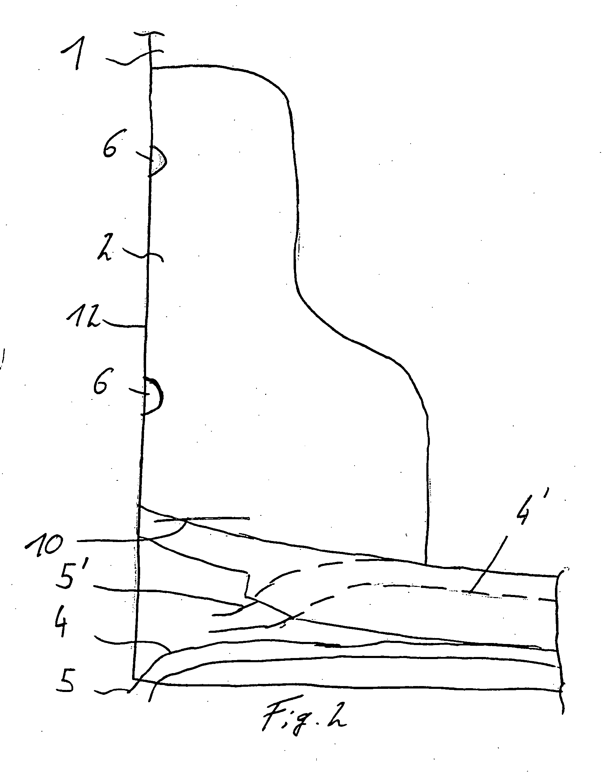

In der Figur 2 ist der Einführbereich 2 eines nicht dargestellten Gasgenerators mit verschiedenen Nahtverläufen gezeigt. Auch hier ist der Gewebezuschnitt des Airbags 1 entlang einer Falznaht 12 aufeinander gelegt, wobei halbkreisförmige Ausstanzungen 6 zum Durchtritt von Befestigungsbolzen, die an dem Gasgenerator angeordnet sind, vorgesehen sind. Diese Ausstanzungen oder Ausnehmungen 6 ermöglichen einen Durchtritt der in der Regel zylindrischen Befestigungsbolzen. Der Aufnahmebereich 2 des Gasgenerators kann über eine Heftnaht abgetrennt bzw. abgegrenzt sein. Eine Einführöffnung 10 ist in einer Gewebelage in Gestalt eines Schlitzes vorgesehen. Der herkömmliche Nahtverlauf einer Umfangsnaht 4' ist durch eine gestrichelte Linie dargestellt, der Restfadenüberstand 5' der herkömmlichen Umfangsnaht 4' kann im Bereich der elektrischen Kontaktierung zu Störungen führen. Der erfindungsgemäße neue Nahtverlauf der Umfangsnaht 4 ist in einer durchgezogenen Linie dargestellt. Der Restfadenüberstand 5, der aus einem verriegelten Kettnahtfaden besteht, ist weit weg von der Einführöffnung 10 angeordnet, so dass der Restfadenüberstand 5 des Saumnahtfadens nicht in den Steckerbereich gelangen kann. Die Kettnaht kann dabei verriegelt sein.

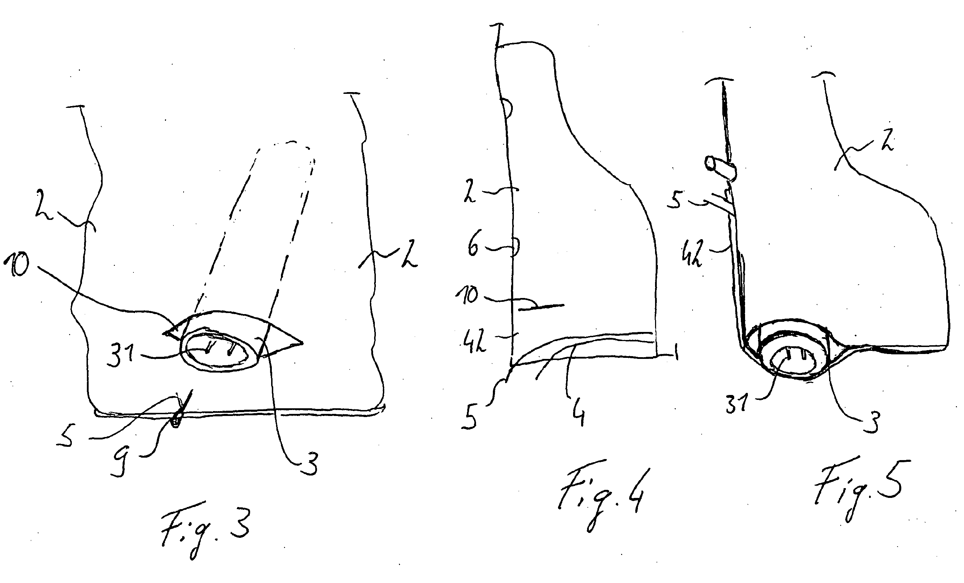

In der Figur 3 ist eine Variante der Erfindung mit einem eingeführten Gasgenerator 3 und einer elektrischen Kontaktierung 31 gezeigt. Der Restfadenüberstand 5 ist über eine Heftnaht an dem Airbaggewebe fixiert.

In der Figur 4 ist ein Nahtverlauf ähnlich der Figur 2 gezeigt. Die Einführöffnung 10 ist als Schlitz ausgebildet. Zwischen der Einführöffnung 10 und der Saumnaht 4 ist ein Gewebebereich 42 ausgebildet, der nach dem Einführen eines Gasgenerators 3, wie es in der Figur 5 gezeigt ist, nach hinten und oben umgeschlagen wird, so dass die auf der Rückseite der Einführöffnung 10 angeordnete Gewebelage mit dem Gewebebereich 2 aufeinander zu liegen kommt. Der umgeklappte Zustand ist in der Figur 5 dargestellt. Der Gewebebereich 42 wird auf der Rückseite des Airbags 1 bzw. des Aufnahmebereiches 2 aufgelegt und fixiert, beispielsweise verklebt, vernäht oder verschweißt. Dadurch wird der Restfadenüberstand der Saumnaht 4 aus dem Bereich der elektrischen Kontaktierung herausbewegt.

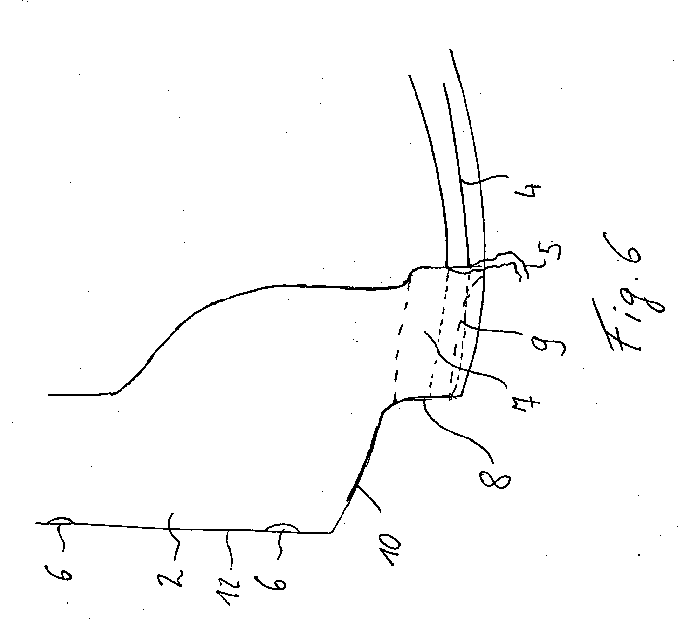

Eine Variante der Erfindung ist in der Figur 6 dargestellt, bei der der Aufnahmebereich 2 dargestellt ist. Die Einführöffnung 10 wird durch einen Einschnitt erzeugt, der oberhalb der Saumnaht 4, von der Falzkante 12 ausgehend, in Richtung auf das Airbaggewebe durch beide Gewebelagen hindurch eingebracht wird. Der dadurch entstehende Lappen 7 wird um eine Faltkante 8 von der Falzkante 12 weggefaltet, so dass der Saumnahtüberstand 5 außerhalb der Reichweite der Einführöffnung 10 fixiert wird. Der Lappen 7 kann über eine Heftnaht 9 fixiert sein. Alternativ können andere Festlegungsmethoden gewählt werden, beispielsweise verkleben oder verschweißen.

Sowohl durch das Umlegen gemäß der Figur 5 als auch gemäß der Figur 6 wird eine verbesserte Abdichtung der Einführöffnung 10 durch ein engeres Anliegen des Airbaggewebes an dem Gasgenerator 3 bewirkt. Die Fixiernaht 9 legt in der Figur 6 den Lappen des eingeschnittenen Airbaggewebes fest.

Alternativ kann das Airbaggewebe auch nach innen in die Kammer eingeführt bzw. eingestülpt werden. Eine Verriegelung oder Fixierung des eingestülpten Airbaggewebebereiches mit dem überstehenden, verriegelten Ende der Saumnaht ist vorgesehen.

Die erfindungsgemäße Ausgestaltung ist nicht auf Seitenairbags beschränkt, sondern kann auch bei anderen Airbags bei einem entsprechenden Nahtverlauf eingesetzt werden.

## Patentansprüche

1. Airbag aus einem Airbaggewebe, insbesondere für einen Seitenairbag, das mit einer zumindest teilumfänglichen Umfangsnaht (4) eine doppellagige Kammer ausbildet, in der eine Einführöffnung (10) für einen Gasgenerator (3) vorgesehen ist, **dadurch gekennzeichnet, dass** ein Restfadenüberstand (5) im Bereich der Einführöffnung (10) fixiert oder mit dem Airbaggewebe umgeklappt und fixiert ist.

2. Airbag nach Anspruch 1, **dadurch gekennzeichnet, dass** der Restfadenüberstand (5) vernäht, verklebt oder verschweißt ist.

3. Airbag nach Anspruch 1, **dadurch gekennzeichnet, dass** das Airbaggewebe mit dem Restfadenüberstand (5) von der Einführöffnung (10) weggeklappt ist.

4. Airbag nach einem der voranstehenden Ansprüche, **dadurch gekennzeichnet, dass** das Airbaggewebe nach innen in die Kammer eingeklappt ist.

5. Airbag nach einem der voranstehenden Ansprüche, **dadurch gekennzeichnet, dass** das Airbaggewebe festgenäht, verklebt oder verschweißt ist.

6. Airbag nach einem der voranstehenden Ansprüche, **dadurch gekennzeichnet, dass** das Airbaggewebe nach dem Einführen des Gasgenerators (3) die Einführöffnung (10) abdichtend umgeklappt ist.

7. Airbag nach einem der voranstehenden Ansprüche, **dadurch gekennzeichnet, dass** an der Einführöffnung (10) eine Umfangsnaht (4) mit Restfadenüberstand (5) über einen Lappen (7) ausläuft, der umgeklappt und fixiert ist.

## Claims

1. Airbag consisting of an airbag fabric, in particular for a side airbag, which with an at least partially circumferential circumference seal (4) forms a double-ply chamber in which an introduction orifice (10) for a gas generator (3) is provided, **characterized in that** a residual thread excess (5) is fixed in the region of the introduction orifice (10) or is folded round and fixed to the airbag fabric.

2. Airbag according to Claim 1, **characterized in that** the residual thread excess (5) is sewn, adhesively bonded or welded.

3. Airbag according to Claim 1, **characterized in that** the airbag fabric having the residual thread excess (5) is folded away from the introduction orifice (10).

4. Airbag according to one of the preceding claims, **characterized in that** the airbag fabric is folded inwards into the chamber.

5. Airbag according to one of the preceding claims, **characterized in that** the airbag fabric is sewn tightly, adhesively bonded or welded.

6. Airbag according to one of the preceding claims, **characterized in that**, after the gas generator (3) has been introduced, the airbag fabric is folded round so as to seal off the introduction orifice (10).

7. Airbag according to one of the preceding claims, **characterized in that**, at the introduction orifice (10), a circumference seal (4) having residual thread excess (5) runs out via a tab (7) which is folded round and fixed.

## Revendications

1. Airbag en tissu d'airbag, plus particulièrement pour un airbag latéral, qui forme une chambre à double couche avec une couture périphérique (4) sur au moins une partie de sa circonférence, dans laquelle est prévue une ouverture d'entrée (10) pour un générateur de gaz (3), **caractérisé en ce qu'**un reliquat de fil dépassant (5) est fixé dans la région de l'ouverture d'entrée (5) ou est replié et fixé avec le tissu d'airbag.

2. Airbag selon la revendication 1, **caractérisé en ce que** le reliquat de fil dépassant (5) est cousu, collé ou soudé.

3. Airbag selon la revendication 1, **caractérisé en ce que** le tissu d'airbag est replié avec le reliquat de fil dépassant (5) dans la direction opposée à l'ouverture d'entrée.

4. Airbag selon l'une quelconque des revendications précédentes, **caractérisé en ce que** le tissu d'airbag est replié vers l'intérieur de la chambre.

5. Airbag selon l'une quelconque des revendications précédentes, **caractérisé en ce que** le tissu d'airbag est cousu, collé ou soudé.

6. Airbag selon l'une quelconque des revendications précédentes, **caractérisé en ce que** le tissu d'airbag est replié de façon étanche avec l'ouverture d'entrée (10) après insertion du générateur de gaz (3).

7. Airbag selon l'une quelconque des revendications précédentes, **caractérisé en ce qu'**une couture périphérique (4) se termine au niveau de l'ouverture d'entrée (10) par un reliquat de fil dépassant (5) sur une patte (7), qui est repliée et fixée.
